# EUROPÄISCHE PATENTSCHRIFT

(11) **EP 2 181 343 B1**
(45) Veröffentlichungstag und Bekanntmachung des Hinweises auf die Patenterteilung: **28.12.2011**
(21) Anmeldenummer: 08761339.4
(22) Anmeldetag: 24.06.2008
(51) Int. Cl.: G01S 7/527, G01S 15/10, G01S 15/93

(54) **ABSTANDSENSOR UND VERFAHREN ZUM BESTIMMEN EINES ABSTANDS**
DISTANCE SENSOR AND METHOD FOR DETERMINING A DISTANCE
DÉTECTEUR DE DISTANCE ET PROCÉDÉ POUR LA DÉTERMINATION D'UNE DISTANCE

(30) Priorität: 21.08.2007 DE 102007039348
(43) Veröffentlichungstag der Anmeldung: 05.05.2010
(73) Patentinhaber: Robert Bosch GmbH, 70442 Stuttgart (DE)
(72) Erfinder: NIEMZ, Volker, 71229 Leonberg (DE)
(86) Internationale Anmeldenummer: PCT/EP2008/058028
(87) Internationale Veröffentlichungsnummer: WO 2009/024375

(56) Entgegenhaltungen:
- EP-A- 1 562 050
- EP-A- 1 624 319
- GB-A- 2 207 757
- US-A- 4 809 241
- US-A1- 2005 110 620

## Beschreibung

### STAND DER TECHNIK

Die vorliegende Erfindung betrifft einen Abstandsensor und ein Verfahren zum Bestimmen eines Abstands, insbesondere ein Kraftfahrzeug mit dem Abstandsensor und ein Verfahren für eine Einparkhilfe, die auf dem Verfahren zum Bestimmen eines Abstands beruht.

Eine herkömmliche Einparkhilfe bestimmt einen Abstand eines Kraftfahrzeuges zu Objekten in dessen Umgebung. Die bestimmten Abstände werden einem Fahrer des Kraftfahrzeugs akustisch und mittels einer Anzeige signalisiert. Eine solche Einparkhilfe ist z. B. aus der DE 43 35 728 A1 bekannt.

Ein Verfahren zum Bestimmen des Abstandes verwendet ein Puls-EchoVerfahren (Laufzeitmessungen) von Ultraschallpulsen. Hierbei wird der Abstand zwischen dem Kraftfahrzeug und einem Objekt als Produkt der Schallgeschwindigkeit in Luft und einer Zeitspanne zwischen einem Aussenden eines Ultraschallpulses und Empfangen von reflektierten Anteilen des Ultraschallpulses bestimmt. Die Zeitspanne wird durch einen Zeitmesser bestimmt, der durch das Aussenden des Ultraschallpulses gestartet wird und der zu dem Zeitpunkt angehalten wird, wenn ein Empfänger ein Ultraschallsignal empfängt, das einen vorbestimmten Signalpegel überschreitet.

Aus der GB 2 207 757 A ist ein Apparat zur Abstandsmessung bekannt, der Mittel enthält, um ein akustisches Signal an einen entfernten Ort zu senden, dessen Entfernung gemessen wird, und Mittel, um die reflektierte akustische Energie zurückzubekommen, und einen Schaltkreis, um störende Echos zu eliminieren, indem eine Schwellwertsignalhöhe über der Signalhöhe der genannten störenden Echos bereitgestellt wird und einen getakteten Schaltkreis, um das Intervall zwischen der Übertragung und dem Empfang des akustischen Signals zu takten. Weiterhin ist aus der EP 1562 050 A ein Verfahren und eine Vorrichtung zur Anpassung eines Schwellwertes einer Detektionseinrichtung mit mehreren Schritten bekannt. Darüber hinaus ist aus der US 2005/110620 A1 ein Paar Abstandsmesssensoren bekannt, die sich in unterschiedlicher Höhe befinden und den Abstand zu einem Hindernis messen.

### OFFENBARUNG DER ERFINDUNG

Erfindungsgemäß ist nach Anspruch 1 ein Abstandsensor mit einem Ultraschallsender und -Empfänger zum Aussenden von Ultraschallpulsen und Empfangen reflektierter Ultraschallpulse von einem Objekt, einer Diskriminatoreinheit, die eingerichtet ist einen Schwerpunkt des empfangenen reflektierten Ultraschallpulses basierend auf einem Überschreiten eines ersten Schwellwertes und einem nachfolgenden Unterschreiten eines zweiten Schwellwertes durch den empfangenen reflektierten Ultraschallpuls zu bestimmen, und einer Flugzeit-Auswertungseinrichtung, die eingerichtet ist basierend auf dem bestimmten Schwerpunkt den Abstand zu dem Objekt zu bestimmen, vorgesehen.

Ferner ist ein Verfahren zum Bestimmen eines Abstands zu einem Objekt mittels einer Laufzeitmessung eines reflektierten Ultraschallpulses vorgesehen, wobei das Ende der Laufzeitmessung durch einen Schwerpunkt des reflektierten Ultraschallpulses festgelegt wird.

Ein Aspekt der vorliegenden Erfindung ist den Schwerpunkt des reflektierten Ultraschallpulses zur Bestimmung der Laufzeit eines Ultraschallpulses heranzuziehen. Es wurde erkannt, dass eine solche vorgenommene Laufzeitmessung unabhängiger von Umwelteinflüssen, wie zum Beispiel Umgebungstemperatur, Luftfeuchtigkeit, Luftdruck und Wind ist.

### KURZE BESCHREIBUNG DER ZEICHNUNGEN

Die vorliegende Erfindung wird nachfolgend anhand bevorzugter Ausführungsformen und beigefügten Figuren erläutert. In den Figuren zeigen:
- Fig. 1: Beispiel eines Zeitverlaufs einer erfasste Signalintensität von einem Ultraschallempfänger;
- Fig. 2: Beispiel eines Zeitverlauf einer erfassten Signalintensität von einem Ultraschallempfänger zur Illustration einer Ausführungsform;
- Fig. 3a: Illustration eines Signalrauschens zur Erläuterung einer Ausgestaltung;
- Fig. 3b: Illustration einer weiteren Ausgestaltung in Verbindung mit einem Signalrauschen;
- Fig. 4: geometrische Überlegungen zu einer weiteren Ausführungsform;
- Fig. 5: geometrische Überlegungen zu der weiteren Ausführungsform;
- Fig. 6: Darstellung der Abhängigkeit einer Pulsbreite tb von der Objekthöhe;
- Fig. 7: Darstellung der dynamischen Abhängigkeit einer Pulsbreite tb von der Objekthöhe;
- Fig. 8: Auftragung empfangener Ultraschallpulse von verschiedenen Objekten;
- Fig. 9: Abhängigkeit einer Wahrscheinlichkeit für Mehrfachreflexionen an einer Fahrzeugreihe in Abhängigkeit vom Abstand zur Fahrzeugreihe;
- Fig. 10: Abhängigkeit einer Wahrscheinlichkeit für Mehrfachreflexionen an einer Hecke von dem Abstand zur Hecke;
- Fig. 11: statistische Verteilung der bestimmten Abstände in Abhängigkeit der Objekthöhe und
- Fig. 12: Blockdarstellung eines Abstandsensors.

### AUSFÜHRUNGSFORMEN DER ERFINDUNG

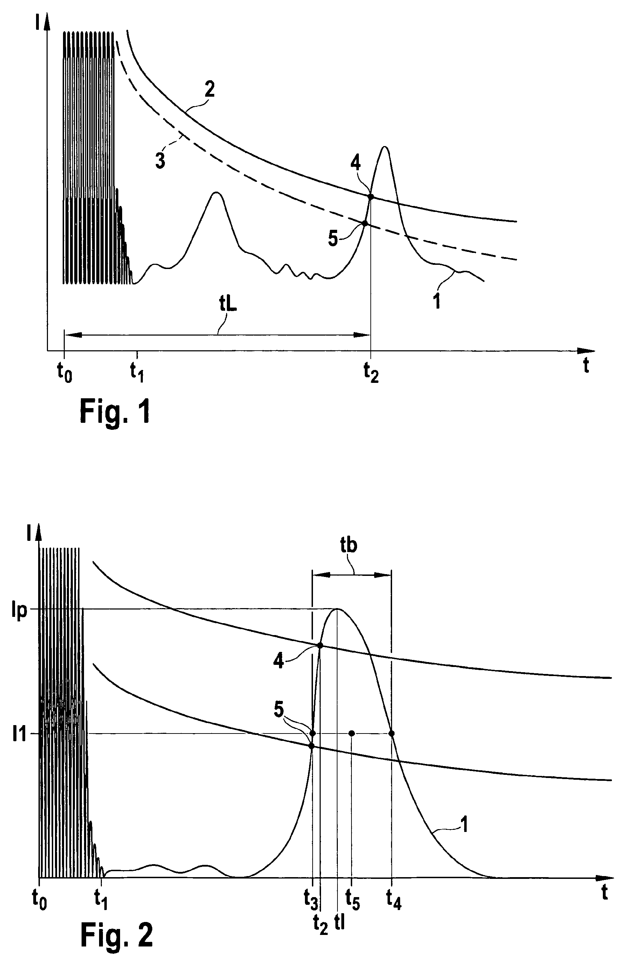

Eine Funktionsweise eines Verfahrens zum Bestimmen eines Abstands zu einem Objekt wird beispielhaft anhand Figur 1 erläutert, die typische beziehungsweise schematische Signale 1 eines Ultraschallempfängers eines Abstands Sensors darstellen.

Ein Ultraschallpuls wird zwischen den Zeitpunkten t0 und t1 von einem Ultraschallsender ausgesendet. Zweckmäßigerweise wird der Ultraschallempfänger während des Aussendens deaktiviert. Danach empfängt der Ultraschallempfänger Ultraschallpulse, die durch Reflexionen des ausgesendeten Ultraschallpulses an Objekten entstehen.

Zum Teil empfängt der Ultraschallempfänger noch reflektierte Anteile von Ultraschallpulsen, die vor dem zuletzt ausgesendeten Ultraschallpuls ausgesendet worden. Diese reflektierten Anteile weisen in der Regel eine geringe Intensität I auf und werden mit Hilfe einer geeignet gewählten Schwellwertkurve 2 ausgeblendet. Die Schwellwertkurve 2 kann wie in Fig. 1 dargestellt eine hyperbolische Funktion der Zeit t sein. Oder eine andere geeignete Schwellwertkurve 2 deren Schwellwert mit zunehmender Dauer nach dem Aussenden eines Ultraschallpulses abnimmt.

Ein Zeitmesser erfasst die Zeitspanne tL zwischen dem Zeitpunkt t0 des Aussendens des Ultraschallpulses und dem Zeitpunkt t2, wenn die Intensität eines reflektierten Ultraschallpulses den Schwellwert 4 der Schwellwertkurve 2 übersteigt. Die Zeitspanne tL entspricht in etwa der doppelten Laufzeit zwischen dem Ultraschallsender und -Empfänger. Allerdings hängt die bestimmte Laufzeit von der Wahl der Schwellwertkurve 2 ab, wie durch die zum Vergleich eingezeichnete Schwellwertkurve 3 gezeigt. Bei der Wahl einer Schwellwertkurve 2 mit vergleichsweise großen Schwellwerten wird eine längere Laufzeit bestimmt. In gleicher Weise wird eine längere Laufzeit bei einer höheren Dämpfung der Ultraschallpulse durch die Umgebung bestimmt. Die Dämpfung der Ultraschallpulse wird unter anderem durch die Luftfeuchtigkeit, die Umgebungstemperatur, den Luftdruck und die Windverhältnisse beeinflusst.

In einer ersten Ausführungsform eines Verfahrens wird eine Pulsbreite tb eines reflektierten Pulses bei einer vorgegebenen Signalintensität I1 bestimmt (Fig. 2). Die Pulsbreite tb entspricht der Zeitspanne zwischen einem Zeitpunkt t3 beim erstmaligen Überschreiten eines ersten Schwellwertes, entsprechend der vorgegebenen Signalintensität I1, und einem nachfolgenden Zeitpunkt t4 beim erstmaligen Unterschreiten eines zweiten Schwellwertes, der in vorliegendem Ausführungsbeispiel ebenfalls gleich der vorgegebenen Signalintensität I1 gewählt ist.

Zum Bestimmen einer Laufzeit tL wird das Signalmaxima Ip des reflektierten Ultraschallpulses herangezogen. Das Signalmaxima wird näherungsweise als Schwerpunkt t5 zwischen dem Zeitpunkt t3 und dem Zeitpunkt t4 bestimmt. Wie aus Fig. 1 ersichtlich, ist die Abweichung des Schwerpunktes t5 von dem Zeitpunkt t1 an dem das Signalmaxima Ip auftritt geringer als die entsprechenden zeitlichen Abweichungen der Schnittpunkte 4, 5 der Schwellwertkurven 2, 3 mit dem Intensitätsverlauf I des reflektierten Signals 1 von dem Intensitätsmaximum Ip.

Der Schwerpunkt t5 kann als die Mitte der Pulsbreite tb ermittelt werden. In einer anderen Ausgestaltung wird der Schwerpunkt t5 durch ein gewichtetes Mittel gemäß der Beziehung t5 = (1/2-a) t4 + (1/2+a) t3 ermittelt, wobei der Parameter a zwischen -1/2 und +1/2 gewählt werden kann.

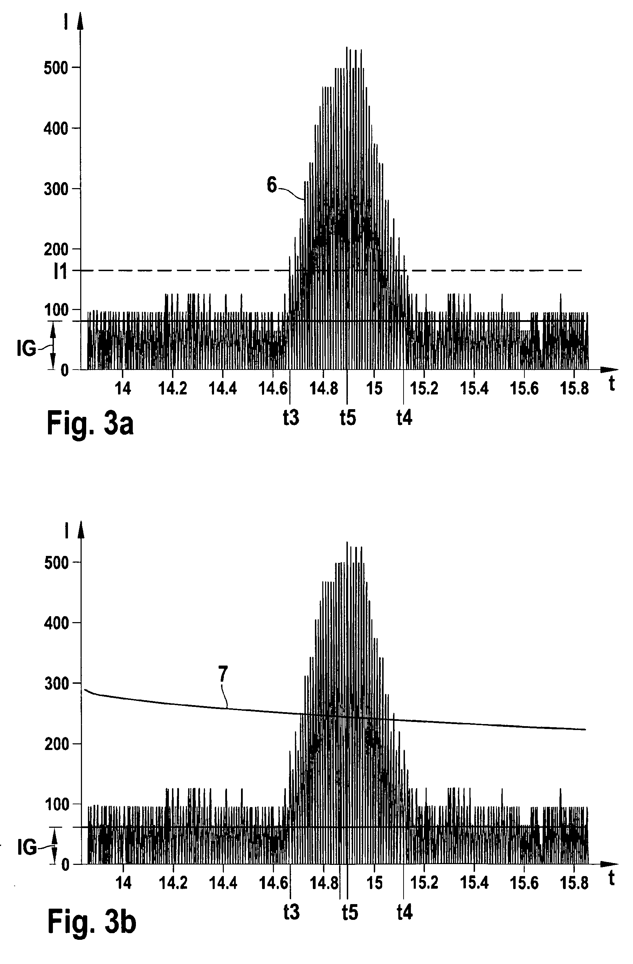

Die vorgegebene Signalintensität I1 kann basierend auf einem Signalrauschen des verwendeten Ultraschallsenders und des verwendeten Ultraschallempfängers festgelegt werden. Eine Ausgestaltung des Verfahrens sieht vor das Signalrauschen in einem ersten Schritt zu bestimmen. In Fig. 3a ist beispielhaft die Intensität I eines empfangenen reflektierten Ultraschallpulses 6 über willkürlichen Einheiten dargestellt. Das Signalrauschen IG beträgt hier beispielhaft etwa 80 mV. Eine Rauschanalyseeinrichtung bestimmt das Signalrauschen anhand statistischer Analyseverfahren. Die vorgegebene Signalintensität I1 beziehungsweise der erste Schwellwert werden als etwa das Doppelte des bestimmten Signalrauschens IG festgelegt. In anderen Ausführungsformen wird ein anderes Vielfaches als das Doppelte aus dem Bereich zwischen dem 1,5-fachen bis fünffachen festgelegt. Die Bestimmung des Schwerpunktes t5 erfolgt wie in der ersten Ausführungsform beschrieben.

Das Rauschen ändert sich mit der Temperatur. Das beschriebene Verfahren misst in einer Ausgestaltung daher regelmäßig während des Betriebs, zum Beispiel nach einer vorgegebenen Anzahl von emittierten Ultraschallpulsen, das Signalrauschen und ermittelt erneut die vorgegebene Signalintensität I1.

In den vorhergehenden Ausgestaltungen der Ausführungsform werden der erste Schwellwert und der zweite Schwellwert auf die vorgegebenen Signalintensität I1 festgesetzt. In einer weiteren Ausgestaltung wird eine Schwellwertkurve 7 in Abhängigkeit des Signalrauschens IG bestimmt (Fig. 3b). Die Schwellwertkurve 7 kann eine hyperbolische Abhängigkeit eines Schwellwertes von der Zeitspanne seit Aussenden des Ultraschallpulses aufweisen. Die Intensität I des reflektierten Ultraschallpulses 6 wird mit der Schwellwertkurve 7 verglichen. Es werden entsprechend die Zeitpunkte t3 und t4 des erstmaligen Überschreitens und des nachfolgenden erstmaligen Unterschreitens der Schwellwertkurve 7 durch die Intensität I des Ultraschallpulses 6 bestimmt. Der Schwerpunkt t5 wird gemäß der bereits beschriebenen Ausführungsform bestimmt.

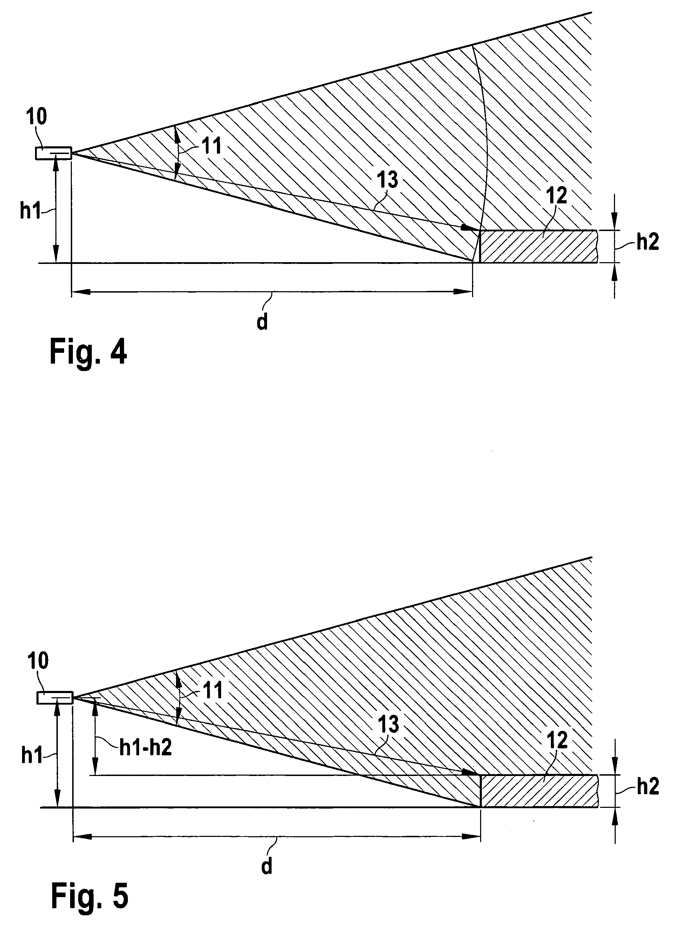

In Figur 4 ist schematisch ein Ultraschallsender /-Empfänger 10 gezeigt, welcher Ultraschallpulse innerhalb eines Raumwinkels 11 aussendet und aus diesen Richtungen empfängt. Der Ultraschallsender /- Empfänger 10 ist mit einem vertikalen Abstand h1 zum Boden angebracht. In dem dargestellten Beispiel reflektiert ein Objekt 12 geringer Höhe h2, z.B. ein Bordstein, den Ultraschallpuls 13. Die Höhe h2 des Objekts 12 ist kleiner als der vertikale Abstand h1, d.h. der Ultraschallsender /-Empfänger 10 ist oberhalb des Objekts 12 angeordnet.

Maßgeblich für das Einparken ist der Abstand d gemessen in der Ebene des Bodens, nachfolgend als seitlicher Abstand d bezeichnet. Ein aus der Laufzeit des Ultraschallpulses 13 bestimmter Abstand ist größer als der seitliche Abstand d. Die Abweichung zwischen einem aus der Laufzeitmessung ermittelten Abstand und dem zeitlichen Abstand d ist besonders für Objekte 12 signifikant, deren Höhe h2 kleiner als die Montagehöhe h1 des Ultraschallsenders /- Empfängers 10 ist.

Eine zweite Ausführungsform korrigiert den aus der Laufzeitmessung des Ultraschallpulses 13 gemessenen Abstand. Die Laufzeit des Ultraschallpulses 13 kann gemäß der ersten Ausführungsform ermittelt werden. Eine Schätzeinrichtung schätzt die Höhe h2 des Objekts 12 auf Basis der reflektierten Ultraschallpulse 13. Eine Korrektureinrichtung ermittelt nach dem Satz von Pythagoras aus der Differenz des vertikalen Abstandes h1 und der Höhe des Objekts h2 sowie dem aus der Laufzeit des Ultraschallpulses 13 den seitlichen Abstand d des Objekts 12 (vgl. Fig 5).

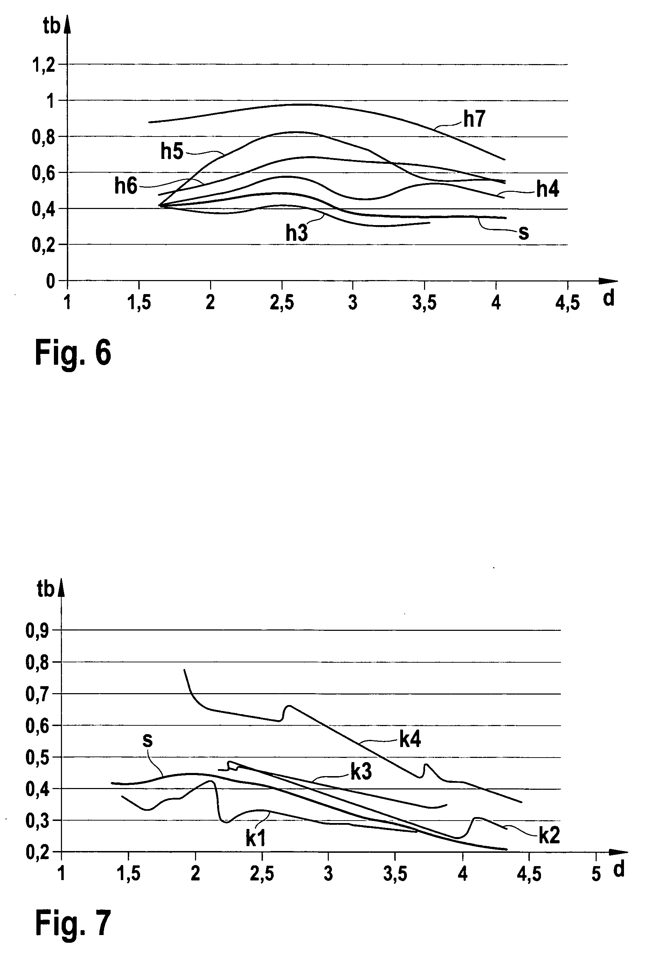

Die Schätzeinrichtung bedient sich ein oder mehrerer Merkmale der reflektierten Ultraschallpulse, um daraus die Höhe h2 des Objekts 12 zu ermitteln. Unter anderem kann die Schätzeinrichtung die durchschnittliche Pulsbreite tb der reflektierten Ultraschallpulse 13 analysieren. In Fig. 6 ist eine Serie von Messungen h3-h7 zur Bestimmung der Abhängigkeit des seitlichen Abstandes d Pulsbreiten für verschiedene hohe Objekte 12 dargestellt. Die Messung h3 wurde an dem kleinsten Objekt, die Messung h7 an dem größten Objekt durchgeführt. Es ist erkennbar, dass die Pulsbreite tb mit zunehmender Höhe h2 des Objekts zunimmt. In der Schätzeinrichtung ist ein Kennlinienfeld abgespeichert, das den Pulsbreiten eine Höhe h2 des Objekts 12 zuordnet. Das Kennlinienfeld kann zudem eine Abhängigkeit der Pulsbreite tb von dem Abstand zu dem Objekt für die Ermittlung der Höhe h2 berücksichtigen. Die Schätzeinrichtung kann ferner abschätzen, ob ein Objekt für in die Einparkhilfe relevant ist. Ein Objekt 12 mit sehr geringer Höhe h2 wird anhand einer geringen Pulsbreite tb erkannt. Liegt die Pulsbreite tb unterhalb eines Schwellwertes s oder einer Schwellwertlinie, signalisiert die Schätzeinrichtung an den Abstandsensor, die entsprechenden Ultraschallpulse auszublenden.

Ein weiteres Merkmal zum Schätzen der Höhe h2 wird durch kontinuierliches Messen der Pulsbreite tb beim Bewegen des Abstandsensors gewonnen. Während des Einparkens oder Ausparkens ergibt sich ein charakteristisches Kennlinienfeld aus der Pulsbreite tb über den seitlichen Abstand d für verschiedene Objekte. Aus der Kenntnis der Objekte, z.B. Bordstein k1, Zaun k2, Hecke k3 und Wand k4, kann die Höhe des Objekts abgeleitet werden. In Fig. 7 ist die Abhängigkeit der Pulsbreite tb über den Abstand die verschiedenen Objekte aufgetragen. Ein entsprechendes Kennlinienfeld ist zur Auswertung in der Schätzeinrichtung abgespeichert.

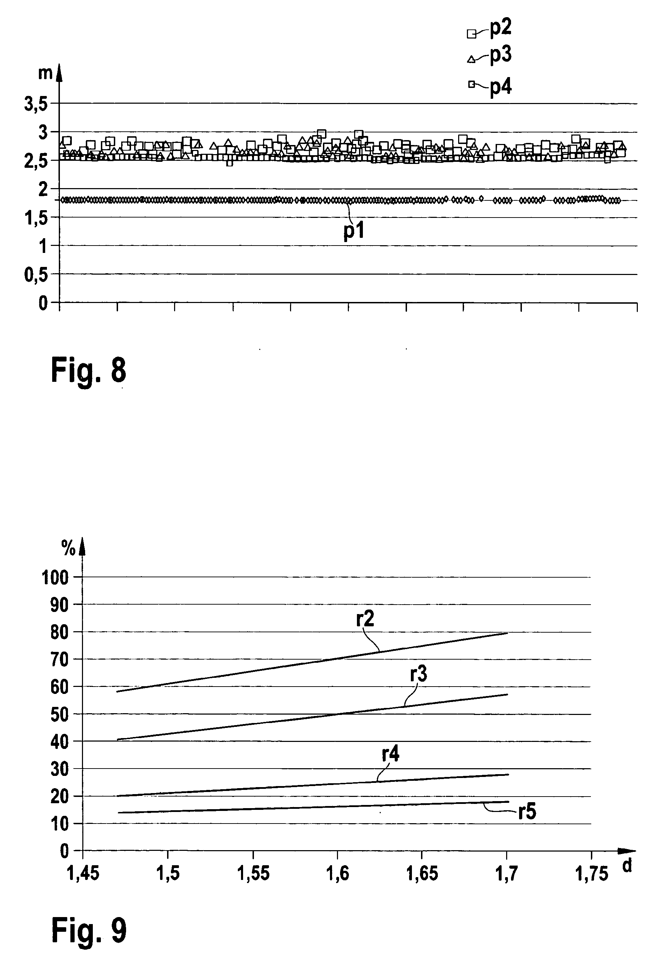

Ein weiteres Merkmal zum Unterscheiden großer und kleiner Objekte ist die Anzahl von Reflexionen an dem Objekt. Fig. 8 zeigt eine beispielhafte Messserie während ein Fahrzeug mit einem Abstandsensor parallel zu einer Hauswand und einer Bordsteinkante fährt. Von der Bordsteinkante im Abstand 1,8 m wird jeweils ein einziger reflexierter Ultraschallpuls p1 empfangen. Von der Hauswand hingegen werden drei reflektierte Ultraschallpulse p2, p3, p4 empfangen.

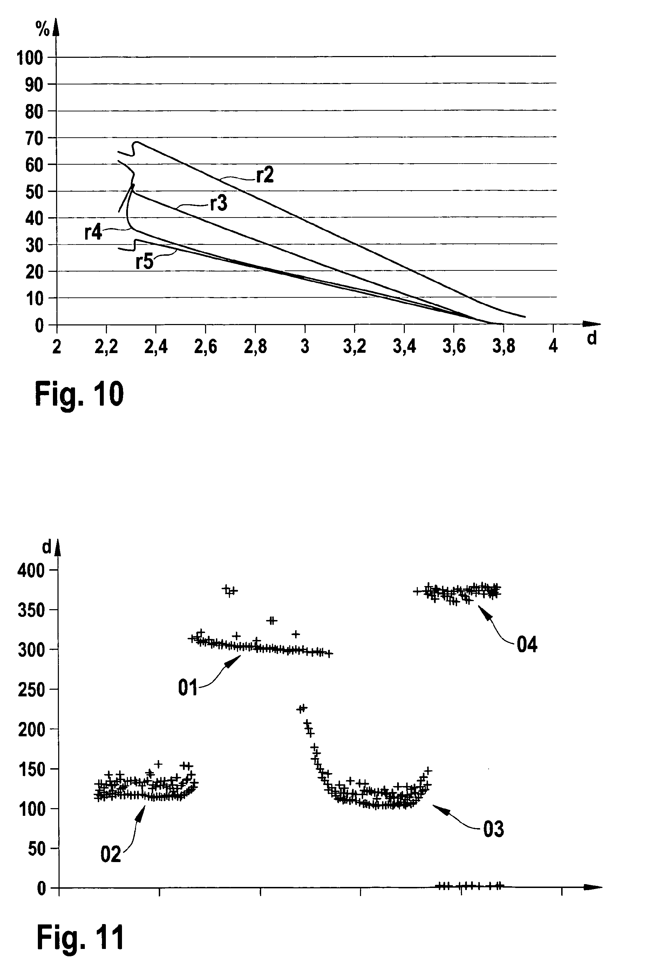

Eine systematische Auswertung der Wahrscheinlichkeit für das Auftreten von mehrfachen Reflexionen ist unter anderem für eine Autoreihe in Fig. 9 und eine Hecke in Fig. 10 dargestellt. Über einem Abstand d ist die Wahrscheinlichkeit für das Auftreten einer zweiten Reflexion r2, einer dritten Reflexion r3, einer vierten Reflexion r4 und einer fünften Reflexion r5 aufgetragen. Die Schätzeinrichtung führt eine statistische Analyse der reflektierten Ultraschallpulse durch, um die gegebene Rate für das Auftreten von entsprechenden mehrfachen Reflexionen zu bestimmen. Die Rate oder die Änderung der Rate mit dem Abstand zum Objekt wird zum Bestimmen der Höhe des Objekts mit abgespeicherten Kennlinienfeldern der Wahrscheinlichkeiten für das Auftreten von mehrfachen Reflexionen verglichen.

Ein weiteres Merkmal zur Unterscheidung von verschieden hohen Objekten ist durch die statistische Verteilung der Pulsbreite tb gegeben. Beispielhaft ist in Fig. 11 eine Messserie an fünf Objekten gezeigt. Über die y-Achse ist der bestimmte seitliche Abstand d zu den einzelnen Objekten dargestellt. Die Messpunkte o1 werden einem niedrigen Objekt, die Messpunkte o2, o3 und o4 hohen Objekten zugeordnet. Ersichtlich ist, dass eine Korrelation zwischen der Streuung der bestimmten Abstände d und der Höhe der Objekte besteht. Die Schätzeinrichtung nutzt diese Korrelation anhand von einem abgespeicherten Kennlinienfeld zum Bestimmen der Höhe des Objekts, nachdem es aus statistischen Auswertungen der bestimmten Abstände deren Steuerung ermittelt hat.

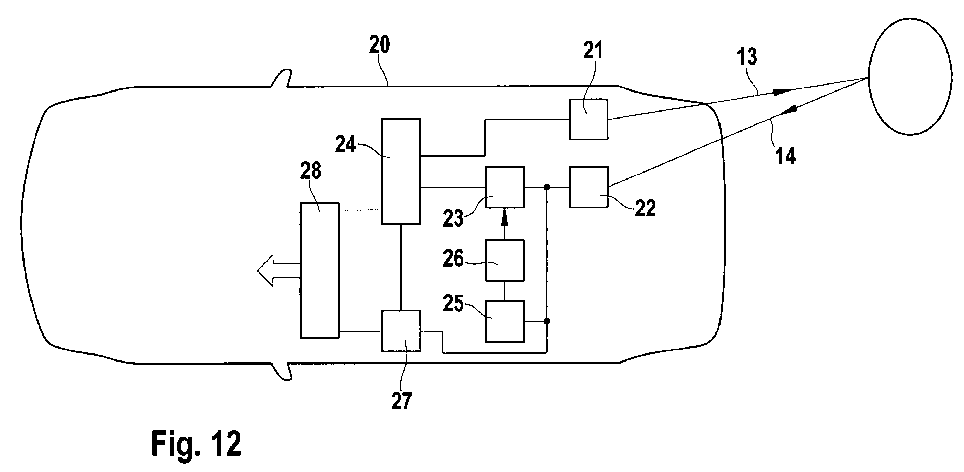

Eine Ausführungsform eines Abstandssensors für ein Kraftfahrzeug 20 ist in Fig. 12 dargestellt. Ein Ultraschall-Pulssender 21 dient zum Aussenden von Ultraschallpulsen 13 in einen vorgegebenen Raumwinkel. Von Objekten reflektierte Anteile 14 des Ultraschallpulses 13 werden von einem Ultraschallempfänger 22 erfasst. Eine Diskriminatoreinheit 23 bestimmt den Schwerpunkt des reflektierten Ultraschallpulses 14 anhand vorgegebener Schwellwerte. Eine Auswertungseinrichtung 24 bestimmt anhand des Schwerpunktes und dem Zeitpunkt des Aussendens des Ultraschallpulses 13 eine Laufzeit des Ultraschallpulses 13 zu dem Objekt. Eine Rauschanalyseeinrichtung 25 analysiert das Signalrauschen der empfangenen Ultraschallsignale und des Empfängers 22. Eine Schwellwertbestimmungseinrichtung 26 legt ansprechend auf das bestimmte Signalrauschen die Schwellwerte für die Diskriminatoreinheit 23 fest. Eine Schätzeinrichtung 27 kann in dem Abstandssensor integriert sein, um aus den Ultraschallsignalen und/oder den ermittelten Abständen die Höhe des reflektierenden Objekts zu bestimmen. Einer Korrektureinrichtung 28 werden die ermittelte Höhe und die aus den Laufzeitmessungen bestimmten Abstände zugeleitet, um den seitlichen Abstand zu ermitteln.

## Patentansprüche

1. Abstandsensor mit einem Ultraschallsender und -empfänger (21,22) zum Aussenden von Ultraschallpulsen (13) und Empfangen reflektierter
Ultraschallpulse von einem Objekt,
einer Diskriminatoreinheit (23), die eingerichtet ist, einen Schwerpunkt (t5) des empfangenen reflektierten Ultraschallpulses basierend auf einem Überschreiten eines ersten Schwellwertes und einem nachfolgenden Unterschreiten eines zweiten Schwellwertes durch den empfangenen reflektierten Ultraschallpuls zu bestimmen, und einer Flugzeit-Auswertungseinrichtung (24), die eingerichtet ist, basierend auf dem bestimmten Schwerpunkt (t5) den Abstand zu dem Objekt zu bestimmen, **gekennzeichnet durch** eine Schätzeinrichtung (27) zum Schätzen der Höhe des Objekts (12) basierend auf einer Pulsbreite (tb) der reflektierten Ultraschallpulse, dem Verhältnis der Anzahl der reflektierten Ultraschallpulse zu der Anzahl der ausgesendeten Ultraschallpulse und/oder einer Verteilung der Schwerpunkte von reflektierten Ultraschallpulsen eines Objekts, und
einer Korrektureinheit (28), die eingerichtet ist, den von der Flugzeit-Auswertungseinrichtung bestimmten Abstand in Abhängigkeit der geschätzten Höhe zu korrigieren.

2. Abstandsensor nach Anspruch 1 mit einer Rauschanalyseeinrichtung (25) zum Bestimmen eines Signalrauschens (IG) des Ultraschallsender und -Empfängers (21, 22) und einer Schwellwertbestimmungseinrichtung (26) zum Festlegen des ersten Schwellwertes und des zweiten Schwellwertes als Vielfaches des bestimmten Signalrauschens.

3. Verfahren zum Bestimmen eines Abstands zu einem Objekt mittels einer Laufzeitmessung eines reflektierten Ultraschallpulses, wobei das Ende der Laufzeitmessung durch einen Schwerpunkt des reflektierten Ultraschallpulses festgelegt wird, **dadurch gekennzeichnet, dass** mittels einer Schätzeinrichtung (27) ein Schätzen der Höhe des Objekts (12) basierend auf einer Pulsbreite (tb) der reflektierten Ultraschallpulse, dem Verhältnis der Anzahl der reflektierten Ultraschallpulse zu der Anzahl der ausgesendeten Ultraschallpulse und/oder einer Verteilung der Schwerpunkte von reflektierten Ultraschallpulsen eines Objekts erfolgt, und dass eine Korrektureinheit (28) vorgesehen wird, die eingerichtet ist, den von der Flugzeit-Auswertungseinrichtung bestimmten Abstand in Abhängigkeit der geschätzten Höhe zu korrigieren.

4. Verfahren nach Anspruch 3, wobei der Schwerpunkt als ein Zeitpunkt bestimmt wird, der zwischen einem ersten Zeitpunkt beim Überschreiten eines ersten Schwellwertes und einem nachfolgenden zweitem Zeitpunkt beim Unterschreiten eines zweiten Schwellwertes durch den Ultraschallpuls liegt.

5. Verfahren nach Anspruch 4, der Schwerpunkt als gewichtetes Mittel des ersten Zeitpunktes und des zweiten Zeitpunktes bestimmt wird.

6. Verfahren nach einem der vorhergehenden Ansprüche 3 bis 5, wobei eine Höhe des Objekts basierend auf einer Mehrzahl von reflektierten Ultraschallpulsen geschätzt wird und der durch die Laufzeitmessung bestimmte Abstand in Abhängigkeit der geschätzten Höhe des Objekts korrigiert wird.

7. Verfahren nach Anspruch 6, wobei die Höhe des Objekts basierend auf einer Pulsbreite tb der reflektierten Ultraschallpulse, dem Verhältnis der Anzahl der reflektierten Ultraschallpulse zu der Anzahl der ausgesendeten Ultraschallpulse und/oder einer Verteilung der durch Laufzeitmessungen bestimmten Abstände aus der Mehrzahl von reflektierten Ultraschallpulsen bestimmt wird.

8. Verfahren nach einem der vorhergehenden Ansprüche 3 bis 7, wobei ein Signalrauschen bestimmt wird und der erste Schwellwert und zweite Schwellwert als ein Vielfaches des Signalrauschens festgelegt werden.

9. Verfahren nach einem der vorhergehenden Ansprüche 3 bis 8, der erste Schwellwert und der zweite Schwellwert in Abhängigkeit der Umgebungstemperatur festgelegt werden.

## Claims

1. Distance sensor having an ultrasonic transmitter (21) and an ultrasonic receiver (22) for emitting ultrasonic pulses (13) and receiving reflected ultrasonic pulses from an object,
a discriminator unit (23) which is set up to determine a focal point (t5) of the received reflected ultrasonic pulse on the basis of a first threshold value being exceeded by the received reflected ultrasonic pulse and a second threshold value being subsequently undershot by the received reflected ultrasonic pulse, and a flight time evaluation device (24) which is set up to determine the distance to the object on the basis of the focal point (t5) determined, **characterized by** an estimating device (27) for estimating the height of the object (12) on the basis of a pulse width (tb) of the reflected ultrasonic pulses, the ratio of the number of reflected ultrasonic pulses to the number of emitted ultrasonic pulses and/or a distribution of the focal points of reflected ultrasonic pulses of an object, and a correction unit (28) which is set up to correct the distance determined by the flight time evaluation device on the basis of the estimated height.

2. Distance sensor according to Claim 1, having a noise analysis device (25) for determining signal noise (IG) of the ultrasonic transmitter (21) and of the ultrasonic receiver (22), and a threshold value determination device (26) for defining the first threshold value and the second threshold value as a multiple of the signal noise determined.

3. Method for determining a distance to an object by measuring the propagation time of a reflected ultrasonic pulse, the end of the propagation time measurement being defined by a focal point of the reflected ultrasonic pulse, **characterized in that** an estimating device (27) is used to estimate the height of the object (12) on the basis of a pulse width (tb) of the reflected ultrasonic pulses, the ratio of the number of reflected ultrasonic pulses to the number of emitted ultrasonic pulses and/or a distribution of the focal points of reflected ultrasonic pulses of an object, and **in that** provision is made of a correction unit (28) which is set up to correct the distance determined by the flight time evaluation device on the basis of the estimated height.

4. Method according to Claim 3, the focal point being determined as a point in time which lies between a first point in time at which a first threshold value is exceeded by the ultrasonic pulse and a subsequent second point in time at which a second threshold value is undershot by the ultrasonic pulse.

5. Method according to Claim 4, the focal point being determined as a weighted average of the first point in time and the second point in time.

6. Method according to one of the preceding Claims 3 to 5, a height of the object being estimated on the basis of a plurality of reflected ultrasonic pulses, and the distance determined by the propagation time measurement being corrected on the basis of the estimated height of the object.

7. Method according to Claim 6, the height of the object being determined from the plurality of reflected ultrasonic pulses on the basis of a pulse width tb of the reflected ultrasonic pulses, the ratio of the number of reflected ultrasonic pulses to the number of emitted ultrasonic pulses and/or a distribution of the distances determined by propagation time measurements.

8. Method according to one of the preceding Claims 3 to 7, signal noise being determined, and the first threshold value and the second threshold value being defined as a multiple of the signal noise.

9. Method according to one of the preceding Claims 3 to 8, the first threshold value and the second threshold value being defined on the basis of the ambient temperature.

## Revendications

1. Capteur de distance comprenant un émetteur et un récepteur d'ultrasons (21, 22) destinés à émettre des impulsions ultrasonores (13) et à recevoir des impulsions ultrasonores réfléchies par un objet,
une unité de discrimination (23) qui est conçue pour déterminer un barycentre (t5) de l'impulsion ultrasonore réfléchie reçue sur la base d'un dépassement en sens croissant d'un premier seuil suivi d'un dépassement en sens décroissant d'un second seuil par l'impulsion réfléchie reçue, et un dispositif d'évaluation de temps de vol (24) qui est conçu pour déterminer la distance de l'objet, sur la base du barycentre (t5) déterminé, **caractérisé par** un dispositif d'estimation (27) destiné à estimer la hauteur de l'objet (12) sur la base d'une largeur d'impulsion (tb) des impulsions ultrasonores réfléchies, du rapport du nombre des impulsions ultrasonores réfléchies au nombre des impulsions ultrasonores émises et/ou d'une distribution des barycentres des impulsions ultrasonores réfléchies d'un objet, et une unité de correction (28) qui est conçue pour corriger la distance déterminée par le dispositif d'évaluation de temps de vol en fonction de la hauteur estimée.

2. Capteur de distance selon la revendication 1, comprenant un dispositif d'analyse de bruit (25) destiné à déterminer un bruit de signal (IG) de l'émetteur et du récepteur d'ultrasons (21, 22) et un dispositif de détermination de seuil (26) destiné à régler le premier seuil et le second seuil à des multiples du bruit de signal déterminé.

3. Procédé de détermination de la distance d'un objet par mesure d'un temps de parcours d'une impulsion ultrasonore réfléchie, dans lequel la fin de la mesure du temps de parcours est définie par un barycentre de l'impulsion ultrasonore réfléchie, **caractérisé en ce qu'**une estimation de la hauteur de l'objet (12) est effectuée au moyen d'un dispositif d'estimation (27) sur la base d'une largeur d'impulsion (tb) des impulsions ultrasonores réfléchies, du rapport du nombre d'impulsions ultrasonores réfléchies au nombre d'impulsions ultrasonores émises et/ou d'une distribution des barycentres d'impulsions ultrasonores réfléchies d'un objet, et **en ce qu'**il est prévu une unité de correction (28) qui est conçue pour corriger la distance déterminée par le dispositif d'évaluation de temps de vol en fonction de la hauteur estimée.

4. Procédé selon la revendication 3, dans lequel le barycentre est déterminé comme étant un instant se situant entre un premier instant lors duquel l'impulsion ultrasonore franchit un premier seuil en sens croissant et un second instant suivant lors duquel elle franchit un second seuil en sens décroissant.

5. Procédé selon la revendication 4, dans lequel le barycentre est déterminé comme étant une moyenne pondérée du premier instant et du deuxième instant.

6. Procédé selon l'une des revendications 3 à 5 précédentes, dans lequel une hauteur de l'objet est estimée sur la base d'une pluralité d'impulsions ultrasonores réfléchies et dans lequel la distance déterminée par la mesure de temps de parcours est corrigée en fonction de la hauteur estimée de l'objet.

7. Procédé selon la revendication 6, dans lequel la hauteur de l'objet est déterminée à partir de la pluralité d'impulsions ultrasonores réfléchies sur la base d'une largeur d'impulsion tb des impulsions ultrasonores réfléchies, du rapport du nombre des impulsions ultrasonores réfléchies au nombre des impulsions ultrasonores émises et/ou d'une distribution des distances déterminées par des mesures de temps de parcours.

8. Procédé selon l'une des revendications 3 à 7 précédentes, dans lequel un bruit de signal est déterminé et dans lequel le premier seuil et le second seuil sont réglés comme étant un multiple du bruit de signal.

9. Procédé selon les revendications 3 à 8, dans lequel le premier seuil et le second seuil sont déterminés en fonction de la température ambiante.
